# EUROPÄISCHE PATENTANMELDUNG

(11) **EP 0 712 226 A1**
(43) Veröffentlichungstag der Anmeldung: **15.05.1996**
(21) Anmeldenummer: 95202964.3
(22) Anmeldetag: 02.11.1995
(51) Int. Cl.: H04M 1/72

(54) **Batteriepack für ein Mobiltelefon**

(30) Priorität: 10.11.1994 DE 4440093
(71) Anmelder: Philips Patentverwaltung GmbH, 22335 Hamburg (DE); Philips Electronics N.V., 5621 BA Eindhoven (NL)
(72) Erfinder: Rademacher, Karl-Heinz, D-22335 Hamburg (DE); Beermann, Marc, D-22335 Hamburg (DE); Spiro, Vladimir, D-22335 Hamburg (DE)
(74) Vertreter: Erdmann, Anton, Dipl.-Ing.

(57) **Zusammenfassung**

Die Erfindung bezieht sich auf ein Handtelefon, z.B. Mobiltelefon (11), mit einer abnehmbar angeordneten, mit elektrischen Außenkontakten (24) versehenen Stromversorgungseinheit, die beim Zusammenbau über die Außenkontakte (24) mit am Handtelefon angeordneten Gegenkontakten (25) in Berührung gerät. Gemäß der Erfindung werden die Anwendungsmöglichkeiten und die Flexibilität dadurch erhöht, daß die Stromversorgungseinheit (13, 22, 24) als mit Außenkontakten (24) versehenes Gehäuse (13) zur Aufnahme und Kontaktierung mindestens einer handelsüblichen Batterie (22) ausgebildet ist.

## Beschreibung

Die Erfindung bezieht sich auf ein Handtelefon, z.B. Mobiltelefon, mit einer abnehmbar angeordneten, mit elektrischen Außenkontakten versehenen Stromversorgungseinheit, die beim Zusammenbau über die Außenkontakte mit am Handtelefon angeordneten Gegenkontakten in Berührung gerät.

Ein derartiges Handtelefon ist z.B. durch die ältere Patentanmeldung P 44 01 683.2 bekannt geworden. Dieses Handtelefon besitzt an seiner Rückseite einen abgesetzten Bereich zur Aufnahme eines Akkus, der auf nicht dargestellte Weise mit dem Handtelefon lösbar verbunden ist. Derartige Akkus sind als sogenannte Akkupacks ausgebildet, die nach Entleerung abgenommen und an einem Aufladegerät wieder aufgeladen werden. Für die Zeit der Ladung kann das Mobiltelefon nicht benutzt werden, es sei denn, daß ein zweiter Akkupack zur Verfügung steht. Wenn kein Ladegerät zur Verfügung steht, kann das Handtelefon so lange nicht benutzt werden, bis ein Ersatz-Akkupack beschafft wurde. Außerdem besteht keine Möglichkeit zur Benutzung eines derartig ausgebildeten Handtelefons, wenn der bisherige Akku entleert ist und kein Ladegerät zur Verfügung steht.

Der Erfindung liegt die Aufgabe zugrunde, das Handtelefon vielseitiger verwendbar auszugestalten.

Diese Aufgabe wird gemäß der Erfindung dadurch gelöst, daß die Stromversorgungseinheit als mit Außenkontakten versehenes Gehäuse zur Aufnahme und Kontaktierung mindestens einer handelsüblichen Batterie ausgebildet ist. Damit ergibt sich der Vorteil, daß ein derart ausgestaltetes Handtelefon sowohl mit einem handelsüblichen, wiederaufladbaren Akkupack als auch mit handelsüblichen Batteriezellen verwendet werden kann, ohne daß dazu das Handtelefon selbst in seinem Aufbau und seiner Wirkungsweise verändert werden müßte. Anstelle des Akkupacks wird dann lediglich das dem Akkupack angepaßte Gehäuse aufgesetzt, das ein oder mehrere, handelsübliche Batteriezellen enthält. Damit wird der Benutzer unabhängig von einem Ersatzakkupacks oder von einem Ladegerät, wenn nach Entleerung des bisher verwendeten Akkupacks kein Ersatzakkupacks oder kein Ladegerät zur Verfügung steht. Statt des Akkupacks braucht der Benutzer dann lediglich die entsprechenden handelsüblichen Batteriezellen in das Gehäuse einzusetzen und dieses sodann anstelle des Akkupacks mit dem Handtelefon zu verbinden. Dem Benutzer steht somit eine neue, kostengünstige Alternative zur Stromversorgung zur Verfügung. Bei Vorhandensein von derartigen handelsüblichen Batterien ist der Benutzer somit nicht mehr an ein vorhandenes Stromnetz gebunden.

In Ausgestaltung der Erfindung ist vorgesehen, daß das Gehäuse zur Aufnahme der Batterien an den mit dem Handtelefon elektrisch und mechanisch zusammenwirkenden Teilen bzw. Bereichen entsprechend der Form eines handelsüblichen Akkupacks ausgebildet ist. Dadurch erfolgt ein besonders einfaches Auswechseln eines Akkupacks gegen ein Batteriezellen enthaltendes Gehäuse oder umgekehrt.

In weiterer Ausgestaltung der Erfindung ist vorgesehen, daß das Gehäuse an seiner dem Handtelefon zugewandten Befestigungsseite mit einem abnehmbaren Deckel verschließbar ist. Dadurch wird erreicht, daß die eingelegten Batterien bei aufgesetztem Gehäuse nicht herausfallen können.

In Ausgestaltung der Erfindung weist der Deckel an seiner einen Stirnseite mindestens eine starre und an der gegenüberliegenden Seite mindestens eine federnde Rastnase auf, wobei die Rastnasen beim Verschließen des Gehäuses durch den Deckel mit entsprechenden Öffnungen bzw. Vorsprüngen des Gehäuses zusammenwirken. Damit ist das Einsetzen und Herausnehmen der Batterien ohne zusätzliche Werkzeuge möglich.

Eine besonders einfache Möglichkeit zur Befestigung des Deckels am Gehäuse ist dadurch gekennzeichnet, daß die Rastnasen an einem parallel zur Stirnseite des Deckels verlaufenden federnden Steg ausgebildet sind, der mit seinen Enden an der Stirnseite des Deckels befestigt ist und stirnseitig eine Aussparung des Deckels begrenzt. Ein Schließen des Gehäuses mittels des Deckels erfoglt somit auf einfache Weise dadurch, daß dieser zunächst mit seinen starren Rasthaken in die entsprechenden Öffnungen des Gehäuses eingreift und daß sodann der federnde Stege so weit zurückbewegt wird, daß, unter gleichzeitigem Schließen des Deckels, die am Steg angeordneten Rastnasen hinter Vorsprüngen des Gehäuses eingreifen. Ein Lösen des Deckels erfolgt entsprechend auf umgekehrtem Wege.

Damit die in das Gehäuse eingelegten Batteriezellen ohne weiteren Verdrahtungsaufwand mit den außerhalb des Gehäuses liegenden Außenkontakten in elektrische Verbindung gebracht werden können, ist in weiterer Ausgestaltung der Erfindung vorgesehen, daß das Gehäuse mit einer Festverdrahtung versehen ist, durch welche eine oder mehrere Batterien mit den Außenkontakten bzw. miteinander elektrisch verbunden werden können.

In der Zeichnung ist in den Fig. 1 bis 4 ein Ausführungsbeispiel des Gegenstandes gemäß der Erfindung schematisch dargestellt.
Fig. 1 zeigt in perspektivischer Darstellung ein Handtelefon mit einem auf die Rückseite aufgesetzten Gehäuse zur Aufnahme von handelsüblichen Batterien,
Fig. 2 zeigt das gleiche Handtelefon mit abgenommenem, oberhalb des Handtelefons angeordnetem Gehäuse,
Fig. 3 zeigt eine Draufsicht auf das Gehäuse mit abgenommenem Deckel, und
Fig. 4 zeigt den auf das offene Gehäuse gemäß Fig. 3 aufsetzbaren Deckel.

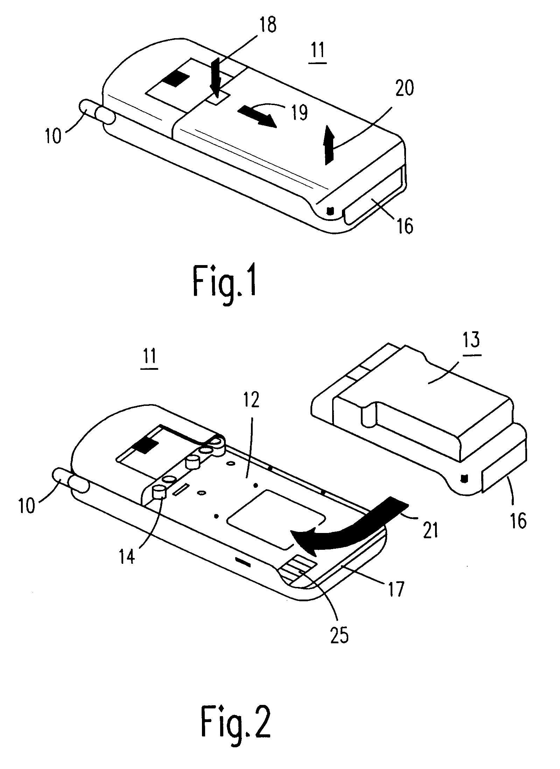

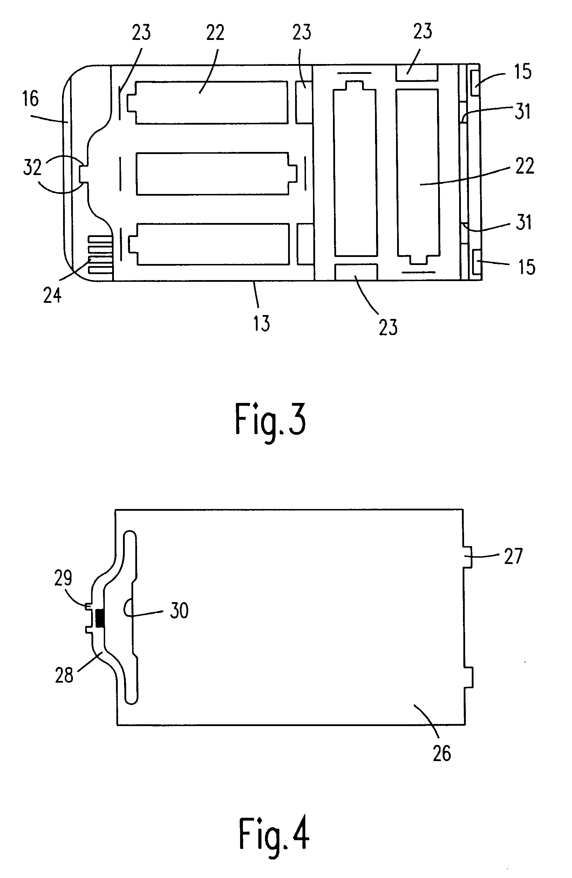

Die schematischen, perspektivischen Darstellungen gemäß Fig. 1 und 2 zeigen ein mit einer Antenne 10 versehenes Handtelefon 11, welches an seiner Rückseite mit einem abgesetzten Bereich 12 zur Aufnahme des Gehäuses 13 versehen ist, in dem handelsübliche Batterien zur Versorgung des Handtelefons untergebracht werden können. Das Handtelefon besitzt im abgesetzten Bereich 12 angeordnete Zapfen 14, die in Ausnehmungen 15 des Gehäuses (Fig. 3) eingreifen. An der gegenüberliegenden Seite greift das Gehäuse 13 mit einer Lasche 16 in einen entsprechenden Schlitz 17 des Handtelefons ein. Zum Lösen des Gehäuses 13 vom Handtelefon 11 erfolgt ein Druck in Richtung 18 auf eine nicht dargestellte Federklemme, so daß daraufhin das Gehäuse in Richtung 19 verschoben und in Richtung 20 abgehoben werden kann. Das Einsetzen des Gehäuses in den abgesetzten Bereich 12 erfolgt entsprechend mit umgekehrten Schritten in Pfeilrichtung 21.

Im vorliegenden Ausführungsbeispiel ist das Gehäuse 13 gemäß Fig. 3 mit fünf handelsüblichen Batteriezellen 22 versehen. Im Gehäuse ist eine plattenförmige Festverdrahtung 23 vorgesehen, durch welche die Batteriezellen 22 beim Einsetzen zusammengeschaltet werden. Die entsprechenden Stromanschlüsse werden nach außen geführt und bilden hier Außenkontakte 24, die beim Aufsetzen des Gehäuses 13 auf das Handtelefon 11 mit am Handtelefon angebrachten festen Gegenkontakten 25 in Berührung geraten, wodurch die Stromversorgung des Handtelefones hergestellt wird.

Die in Fig. 3 dargestellte offene Gehäuseseite wird durch einen in Fig. 4 dargestellten Deckel 26 verschlossen. Dieser Deckel besitzt an seiner rechten Stirnseite zwei starre Rasthaken 27 und an der gegenüberliegenden Seite zwei an einem federnden Steg 28 angeordnete federnde Rasthaken 29, wobei der Steg eine Öffnung 30 begrenzt und somit federnd befestigt ist. Beim Aufsetzen des Deckels 26 greifen die starren Rasthaken 27 in Gehäuseöffnungen 31 und die federnden Rasthaken 29, nach Zurückbiegen des Steges 28, hinter Gehäusevorsprünge 32 ein, so daß der Deckel 26 nach Zurückschnappen des Steges 28 am Gehäuse 13 verriegelt ist. Das Abnehmen des Deckels erfolgt in umgekehrter Reihenfolge. Bei aufgesetztem Deckel 26 liegen die Außenkontakte 24 frei. Das Gehäuse 13 wird sodann mit aufgesetztem Deckel 26 in den abgesetzten Bereich 12 des Handtelefons 11 eingesetzten und auf oben dargestellte Weise verriegelt, wobei die Außenkontakte 24 mit dem am Handtelefon angeordneten Gegenkontakten 25 in Eingriff geraten.

Die äußere Form des Gehäuses ist so gewählt, daß sie die Breite des Handtelefons nicht überragt. Eine Verwendung von vorhandenen Zubehörteilen ist weitestgehend sichergestellt.

## Patentansprüche

1. Handtelefon, z.B. Mobiltelefon, mit einer abnehmbar angeordneten, mit elektrischen Außenkontakten (24) versehenen Stromversorgungseinheit, die beim Zusammenbau über die Außenkontakte mit am Handtelefon angeordneten Gegenkontakten (25) in Berührung gerät, dadurch gekennzeichnet, daß die Stromversorgungseinheit (13, 22, 24) als mit Außenkontakten (24) versehenes Gehäuse (13) zur Aufnahme und Kontaktierung mindestens einer handelsüblichen Batterie (22) ausgebildet ist.

2. Handtelefon nach Anspruch 1, dadurch gekennzeichnet, daß das Gehäuse (13) an den mit dem Handtelefon elektrisch und mechanisch zusammenwirkenden Teilen bzw. Bereichen entsprechend der Form eines handelsüblichen Akkupacks ausgebildet ist.

3. Handtelefon nach Anspruch 2, dadurch gekennzeichnet, daß das Gehäuse (13) an seiner dem Handtelefon (11) zugewandten Befestigungsseite mit einem Deckel (26) verschließbar ist.

4. Handtelefon nach Anspruch 3, dadurch gekennzeichnet, daß der Deckel (26) an seiner einen Stirnseite mindestens eine starre (27) und an der gegenüberliegenden Seite mindestens eine federnde Rastnase (29) aufweist, wobei die Rastnasen (27, 29) beim Schließen des Gehäuses (13) durch den Deckel (26) mit entsprechenden Öffnungen (31) bzw. Vorsprüngen (32) zusammenwirken.

5. Handtelefon nach Anspruch 4, dadurch gekennzeichnet, daß die Rastnasen (29) an einem parallel zur Stirnseite des Deckels (26) verlaufenden federnden Steg (28) ausgebildet sind, der mit seinen Enden an der Stirnseite des Deckels (26) befestigt ist und stirnseitig eine Aussparung (30) des Deckels (26) begrenzt.
